# FASCICULE DE BREVET EUROPEEN

(11) **EP 3 083 268 B1**
(45) Date de publication et mention de la délivrance du brevet: **07.02.2018**
(21) Numéro de dépôt: 14824805.7
(22) Date de dépôt: 17.12.2014
(51) Int. Cl.: B60B 5/02, B60B 21/02, B60B 25/00

(54) **JANTE SOUPLE A CROCHETS FLOTTANTS**
FLEXIBLE RADFELGE MIT SCHWEBENDEN HAKEN
FLEXIBLE WHEEL RIM WITH FLOATING HOOKS

(30) Priorité: 20.12.2013 FR 1363245
(43) Date de publication de la demande: 26.10.2016
(73) Titulaire: Compagnie Générale des Etablissements Michelin, 63000 Clermont-Ferrand (FR)
(72) Inventeur: MERINO LOPEZ, José, F-63040 Clermont-Ferrand Cedex 9 (FR)
(74) Mandataire: Bauvir, Jacques
(86) Numéro de dépôt international: PCT/EP2014/078177
(87) Numéro de publication internationale: WO 2015/091621

(56) Documents cités:
- FR-A- 459 206
- US-B1- 6 425 641

## Description

### DOMAINE DE L'INVENTION

La présente invention concerne les roues destinées à être équipées de pneumatiques, et plus particulièrement les jantes de ces roues. Encore plus particulièrement la présente invention concerne une jante selon le préambule de la revendication 1. Une jante de ce type est connue de FR 459206 A. ARRIERE-PLAN

Lorsqu'un véhicule équipé de roues pourvues de pneumatiques roule sur la chaussée, l'état imparfait de celle-ci peut avoir un effet négatif sur le confort de l'utilisateur du véhicule, en augmentant le bruit auquel est exposé cet utilisateur, et sur l'intégrité du véhicule et notamment des pneumatiques. En effet, ceux-ci subissent en premier des chocs provenant, par exemple, du contact avec un trottoir ou avec un « nid de poule », c'est-à-dire une cavité dans la chaussée générée par une dégradation de son revêtement.

### RESUME DE L'INVENTION

Un des objectifs de la présente invention est de définir une jante de roue destinée à être équipée d'un pneumatique, permettant de réduire le risque de dommages du pneumatique résultant de chocs du type chocs trottoir ou nid de poule, et d'améliorer le confort de l'utilisateur d'un véhicule dont les roues sont équipées de telles jantes, en diminuant le bruit dans le véhicule et en réduisant la gêne occasionnée par le franchissement de petites irrégularités de la route, comme par exemple des plaques d'égout.

Cet objectif est atteint par une jante de véhicule, de révolution, destinée au montage d'un pneumatique, comportant :
une partie axialement centrale comportant un disque ;
deux parties latérales, au moins une des parties latérales (et de préférence les deux parties latérales) étant distincte de la partie axialement centrale, chacune des parties latérales étant pourvue d'un siège de jante destiné à recevoir un bourrelet d'un pneumatique, la partie axialement centrale et les deux parties latérales étant réalisées dans une matrice rigide pouvant être renforcée par une armature de renforcement ;
une partie intermédiaire formant le seul lien mécanique entre la partie axialement centrale et chaque partie latérale distincte de la partie axialement centrale, cette partie intermédiaire étant réalisée dans une matrice souple dépourvue de toute armature de renforcement, le module de Young d'extension monoaxiale de la matrice souple étant supérieur et égal à 50 MPa et inférieur ou égal à 400 MPa, et de préférence supérieur ou égal à 70 MPa et inférieur ou égal à 200 MPa,
Le module de Young d'extension monoaxiale de la matrice rigide est supérieur ou égal à 5 GPa.

Selon un premier mode de réalisation, le contact entre la partie axialement centrale et chaque partie intermédiaire se fait par une extrémité de la partie axialement centrale qui pénètre dans la partie intermédiaire.

Cette extrémité de la partie axialement centrale peut notamment comporter une surépaisseur permettant d'ancrer l'extrémité dans la partie intermédiaire.

Selon un second mode de réalisation, qui est avantageusement combiné avec le premier mode de réalisation, le contact entre chaque partie latérale distincte de la partie axialement centrale et la partie intermédiaire en contact avec elle se fait aussi par une extrémité de la partie latérale qui pénètre dans la partie intermédiaire.

Cette extrémité de la partie latérale peut, elle aussi, comporter une surépaisseur permettant d'ancrer l'extrémité dans la partie intermédiaire.

Selon un troisième mode de réalisation, chaque partie latérale distincte de la partie axialement centrale est totalement recouverte du matériau constituant la matrice souple de la partie intermédiaire en contact avec elle. Ce mode de réalisation permet d'augmenter la surface de contact, pour améliorer le contact entre la partie latérale et la partie intermédiaire. Par ailleurs, une transition trop abrupte peut servir de point de départ d'une fissure ou d'un décollage

Selon un quatrième mode de réalisation particulièrement avantageux, la jante comporte deux parties intermédiaires, et les deux parties intermédiaires sont symétriques l'une par rapport à l'autre.

Le matériau constituant la matrice souple de chaque partie intermédiaire peut notamment être le polyuréthane, une composition caoutchouteuse ou un élastomère thermoplastique. Le polyuréthane et les élastomères thermoplastiques ont l'avantage de pouvoir être injectés. De par leurs rigidités, les polyuréthanes sont particulièrement aptes à une utilisation comme partie intermédiaire

Le matériau constituant la matrice rigide de la partie axialement centrale et des deux parties latérales peut notamment être un métal ou un alliage de métaux.

Il est particulièrement intéressant de prévoir que le module de Young d'extension monoaxiale de la matrice rigide est supérieur au module de Young d'extension monoaxiale de la matrice souple d'un facteur supérieur ou égal à 100. Ainsi les parties latérales sont réellement flottants et les efforts transmis lors d'un choc sont plus faibles.

Bien entendu, il peut être avantageux de combiner plusieurs ou même tous les modes de réalisation évoqués.

### BREVE DESCRIPTION DES DESSINS

La figure 1 représente, en coupe radiale, un ensemble pneumatique-roue.
Les figures 2 à 6 représentent chacune une partie d'une jante selon l'invention

Toutes les figures sont schématiques.

### DESCRIPTION DETAILLEE DE L'INVENTION

Dans l'emploi du terme « radial » il convient de distinguer plusieurs utilisations différentes du mot par la personne du métier. Premièrement, l'expression se réfère à un rayon de la jante (et du pneumatique dont celle-ci est équipée). C'est dans ce sens qu'on dit d'un point P1 qu'il est « radialement intérieur » à un point P2 (ou « radialement à l'intérieur » du point P2) s'il est plus près de l'axe de rotation que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial(e) » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation de la jante (et du pneumatique dont celle-ci est équipée).

Une direction « axiale » est une direction parallèle à l'axe de rotation de la jante (et du pneumatique dont celle-ci est équipée). Un point P5 est dit « axialement intérieur » à un point P6 (ou « axialement à l'intérieur » du point P6) s'il est plus près du plan médian de la jante que le point P6. Inversement, un point P7 est dit « axialement extérieur à » un point P8 (ou « axialement à l'extérieur » du point P8) s'il est plus éloigné du plan médian de la jante que le point P8. Le « plan médian » de la jante est le plan qui est perpendiculaire à l'axe de rotation de la jante et qui se situe à équidistance des sièges de jante destinés à recevoir un bourrelet d'un pneumatique.

Une direction « circonférentielle » est une direction qui est perpendiculaire à la fois à un rayon de la jante et à la direction axiale.

Dans le cadre de ce document, l'expression « composition caoutchouteuse » désigne une composition de caoutchouc comportant au moins un élastomère et une charge.

Par « module de Young d'extension monoaxiale » d'un matériau, on entend ici le module d'extension mesuré à partir d'un test de traction. Pour les matrices souples et les éléments de renforcement textiles, on procède selon la norme DIN EN ISO 527-2 sur une éprouvette de type A selon la norme DIN EN ISO 3167 avec une vitesse de traverse d'1 mm/min. Pour les matrices rigides et les éléments de renforcement métalliques, en revanche, on procède selon la norme ASTM E111-04(2010).

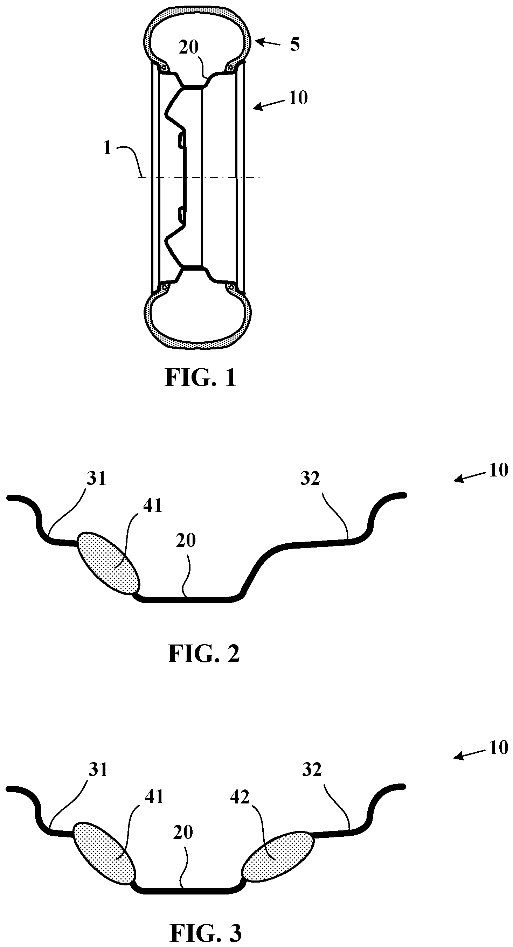

La figure 1 représente, en coupe radiale, un ensemble pneumatique-roue comportant un pneumatique 5. Le pneumatique 5 est monté sur une jante de montage 10 creuse conforme aux normes de l'ETRTO (European Tyre and Rim Technical Organisation). L'axe de rotation commun porte la référence 1.

La figure 2 représente, en coupe radiale, une partie d'une jante 10 selon l'invention. Cette jante 10 comporte une partie axialement centrale 20 comportant un disque (non représenté), deux parties latérales 31 et 32 et une partie intermédiaire 41. La partie latérale 31 est distincte de la partie axialement centrale 20 tandis que la partie latérale 32 est d'une pièce avec celle-ci. Chacune des parties latérales 31 et 32 est pourvue d'un siège de jante destiné à recevoir un bourrelet d'un pneumatique (non représenté). La partie axialement centrale 20 et les deux parties latérales 31 et 32 sont réalisées dans une matrice rigide pouvant être renforcée par une armature de renforcement. En l'occurrence, ces parties sont réalisées en acier dont le module de Young d'extension monoaxiale est égal à 190 GPa. La partie intermédiaire 41 forme le seul lien mécanique entre la partie axialement centrale 20 et la partie latérale 31 ; elle est réalisée dans une matrice souple, en l'occurrence en polyuréthane. Le module de Young d'extension monoaxiale de cette matrice souple est égal à 90 MPa.

La figure 3 présente, en coupe radiale, une partie d'une jante 10 selon un autre mode de réalisation de l'invention. A la différence de la jante de la figure 2, les deux parties latérales 31 et 32 sont distinctes de la partie axialement centrale 20 et il y a deux parties intermédiaires 41 et 42 réalisées en polyuréthane.

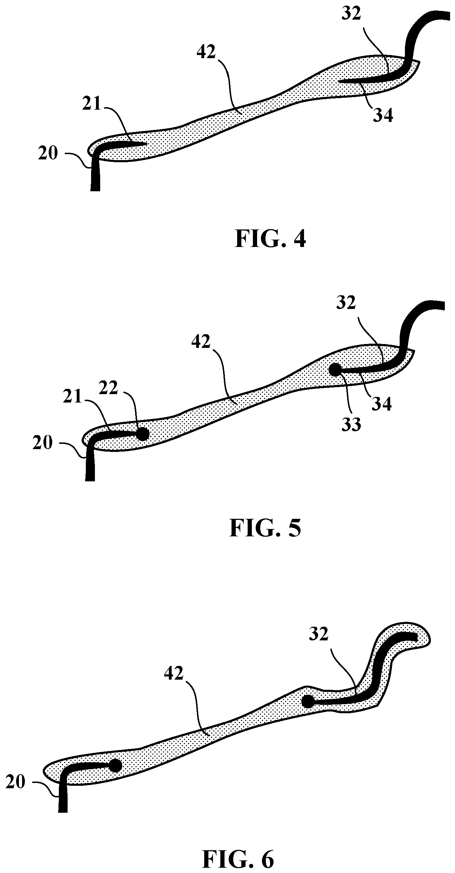

La figure 4 présente, en coupe radiale, une partie d'une autre jante selon l'invention. Ici, le contact entre la partie axialement centrale 20 et la partie intermédiaire 42 se fait par une extrémité 21 de la partie axialement centrale 20 qui pénètre dans la partie intermédiaire 42. De même, le contact entre la partie latérale 32 (qui est distincte de la partie axialement centrale 20) et la partie intermédiaire 42 en contact avec elle se fait par une extrémité 34 de la partie latérale 32 qui pénètre dans la partie intermédiaire 42.

La figure 5 présente, en coupe radiale, une partie d'une autre jante selon l'invention. En l'occurrence, l'extrémité 21 de la partie axialement centrale 20 comporte une surépaisseur 22 permettant d'ancrer l'extrémité dans la partie intermédiaire 32. De même, l'extrémité 34 de la partie latérale 32 comporte une surépaisseur 33 permettant d'ancrer l'extrémité 34 dans la partie intermédiaire 42.

La figure 6 présente, en coupe radiale, une partie d'une autre jante selon l'invention. Ici, la partie latérale 32 (qui est distincte de la partie axialement centrale 20) est totalement recouverte du matériau constituant la matrice souple de la partie intermédiaire 42 en contact avec elle.

Des essais ont été effectués avec une jante comportant deux parties intermédiaires souples correspondant à la figure 5, la partie intermédiaire étant réalisée en polyuréthane ayant un module de Young de 90 MPa. La roue a été montée sur le train avant d'un véhicule Peugeot 307 HDI. Des mesures de bruit ont permis de constater une atténuation significative du bruit perçu à la place du conducteur, sur les bandes 80-100 Hz, 140-170 Hz et 340-380 Hz, par rapport à une roue comportant une jante équivalente dépourvue de parties intermédiaires souples. Les tests de choc trottoir ont également confirmé une amélioration de la résistance de l'ensemble pneumatique-roue aux chocs.

## Revendications

1. Jante de véhicule, de révolution, destinée au montage d'un pneumatique, comportant :
une partie axialement centrale (20) comportant un disque ;
deux parties latérales (31, 32), au moins une des parties latérales étant distincte de la partie axialement centrale, chacune des parties latérales étant pourvue d'un siège de jante destiné à recevoir un bourrelet d'un pneumatique, la partie axialement centrale et les deux parties latérales étant réalisées dans une matrice rigide pouvant être renforcée par une armature de renforcement ;
une partie intermédiaire (41, 42) formant le seul lien mécanique entre la partie axialement centrale et chaque partie latérale distincte de la partie axialement centrale, la jante étant **caractérisée en ce que** la partie intermédiaire étant réalisée dans une matrice souple, le module de Young d'extension monoaxiale de la matrice souple étant supérieur ou égal à 50 MPa et inférieur ou égal à 400 MPa ; et **en ce que** le module de Young d'extension monoaxiale de la matrice rigide est supérieur ou égal à 5 GPa.

2. Jante de véhicule selon la revendication 1, dans laquelle le contact entre la partie axialement centrale (20) et chaque partie intermédiaire (31, 32) se fait par une extrémité (21) de la partie axialement centrale qui pénètre dans la partie intermédiaire.

3. Jante de véhicule selon la revendication 2, dans laquelle ladite extrémité (21) de la partie axialement centrale (20) comporte une surépaisseur (22) permettant d'ancrer l'extrémité dans la partie intermédiaire (31, 32).

4. Jante de véhicule selon l'une quelconque des revendications 1 à 3, dans laquelle le contact entre chaque partie latérale (31, 32) distincte de la partie axialement centrale (20) et la partie intermédiaire (41, 42) en contact avec elle se fait par une extrémité (34) de la partie latérale qui pénètre dans la partie intermédiaire.

5. Jante de véhicule selon la revendication 4, dans laquelle ladite extrémité (34) de la partie latérale (31, 32) comporte une surépaisseur (33) permettant d'ancrer l'extrémité dans la partie intermédiaire (41, 42).

6. Jante de véhicule selon l'une quelconque des revendications 1 à 5, dans laquelle chaque partie latérale (31, 32) distincte de la partie axialement centrale (20) est totalement recouverte du matériau constituant la matrice souple de la partie intermédiaire (41, 42) en contact avec elle.

7. Jante de véhicule selon l'une quelconque des revendications 1 à 6, comportant deux parties intermédiaires (41, 42), dans laquelle les deux parties intermédiaires sont symétriques l'une par rapport à l'autre.

8. Jante de véhicule selon l'une quelconque des revendications 1 à 7, dans laquelle le matériau constituant la matrice souple de chaque partie intermédiaire (41, 42) est le polyuréthane.

9. Jante de véhicule selon l'une quelconque des revendications 1 à 7, dans laquelle le matériau constituant la matrice souple de chaque partie intermédiaire (41, 42) est une composition caoutchouteuse.

10. Jante de véhicule selon l'une quelconque des revendications 1 à 7, dans laquelle le matériau constituant la matrice souple de chaque partie intermédiaire (41, 42) est un élastomère thermoplastique.

11. Jante de véhicule selon l'une quelconque des revendications 1 à 10, dans laquelle le matériau constituant la matrice rigide de la partie axialement centrale (20) et des deux parties latérales (31, 32) est un métal ou un alliage de métaux.

12. Jante de véhicule selon l'une quelconque des revendications 1 à 11, dans laquelle le module de Young d'extension monoaxiale de la matrice rigide est supérieur au module de Young d'extension monoaxiale de la matrice souple d'un facteur supérieur ou égal à 100.

## Patentansprüche

1. Rotationssymmetrische Fahrzeugfelge, die zur Montage eines Reifens bestimmt ist, umfassend:
einen axial mittleren Teil (20), der eine Scheibe aufweist;
zwei seitliche Teile (31, 32), wobei wenigstens einer der seitlichen Teile von dem axial mittleren Teil verschieden ist, wobei jeder der seitlichen Teile mit einem Felgensitz versehen ist, der dazu bestimmt ist, einen Wulst eines Reifens aufzunehmen, wobei der axial mittlere Teil und die zwei seitlichen Teile aus einer starren Matrix hergestellt sind, die durch eine Verstärkungsbewehrung verstärkt sein kann;
einen Zwischenteil (41, 42), der das einzige mechanische Bindeglied zwischen dem axial mittleren Teil und jedem seitlichen Teil, der von dem axial mittleren Teil verschieden ist, bildet, wobei die Felge **dadurch gekennzeichnet ist, dass** der Zwischenteil aus einer flexiblen Matrix hergestellt ist, wobei der Young-Modul bei uniaxialer Dehnung der flexiblen Matrix größer oder gleich 50 MPa und kleiner oder gleich 400 MPa ist;
und dadurch, dass der Young-Modul bei uniaxialer Dehnung der starren Matrix größer oder gleich 5 GPa ist.

2. Fahrzeugfelge nach Anspruch 1, wobei der Kontakt zwischen dem axial mittleren Teil (20) und jedem Zwischenteil (31, 32) durch ein Ende (21) des axial mittleren Teils erfolgt, welches in den Zwischenteil eindringt.

3. Fahrzeugfelge nach Anspruch 2, wobei das Ende (21) des axial mittleren Teils (20) eine Überdicke (22) aufweist, die es ermöglicht, das Ende in dem Zwischenteil (31, 32) zu verankern.

4. Fahrzeugfelge nach einem der Ansprüche 1 bis 3, wobei der Kontakt zwischen jedem seitlichen Teil (31, 32), der von dem axial mittleren Teil (20) verschieden ist, und dem in Kontakt mit ihm befindlichen Zwischenteil (41, 42) durch ein Ende (34) des seitlichen Teils erfolgt, welches in den Zwischenteil eindringt.

5. Fahrzeugfelge nach Anspruch 4, wobei das Ende (34) des seitlichen Teils (31, 32) eine Überdicke (33) aufweist, die es ermöglicht, das Ende in dem Zwischenteil (41, 42) zu verankern.

6. Fahrzeugfelge nach einem der Ansprüche 1 bis 5, wobei jeder seitliche Teil (31, 32), der von dem axial mittleren Teil (20) verschieden ist, vollständig von dem Material bedeckt ist, das die flexible Matrix des in Kontakt mit ihm befindlichen Zwischenteils (41, 42) bildet.

7. Fahrzeugfelge nach einem der Ansprüche 1 bis 6, welche zwei Zwischenteile (41, 42) aufweist, wobei die zwei Zwischenteile zueinander symmetrisch sind.

8. Fahrzeugfelge nach einem der Ansprüche 1 bis 7, wobei das Material, das die flexible Matrix jedes Zwischenteils (41, 42) bildet, Polyurethan ist.

9. Fahrzeugfelge nach einem der Ansprüche 1 bis 7, wobei das Material, das die flexible Matrix jedes Zwischenteils (41, 42) bildet, eine Kautschukzusammensetzung ist.

10. Fahrzeugfelge nach einem der Ansprüche 1 bis 7, wobei das Material, das die flexible Matrix jedes Zwischenteils (41, 42) bildet, ein thermoplastisches Elastomer ist.

11. Fahrzeugfelge nach einem der Ansprüche 1 bis 10, wobei das Material, das die starre Matrix des axial mittleren Teils (20) und der zwei seitlichen Teile (31, 32) bildet, ein Metall oder eine Legierung von Metallen ist.

12. Fahrzeugfelge nach einem der Ansprüche 1 bis 11, wobei der Young-Modul bei uniaxialer Dehnung der starren Matrix um einen Faktor, der größer oder gleich 100 ist, größer als der Young-Modul bei uniaxialer Dehnung der flexiblen Matrix ist.

## Claims

1. Vehicle rim, with symmetry of revolution, intended for the mounting of a tyre, comprising:
an axially central part (20) comprising a disc;
two lateral parts (31, 32), at least one of the lateral parts being separate from the axially central part, each of the lateral parts being provided with a rim seat intended to receive a bead of a tyre, the axially central part and the two lateral parts being made from a rigid matrix that can be reinforced by a reinforcement;
an intermediate part (41, 42) that forms the only mechanical link between the axially central part and each lateral part that is separate from the axially central part, the rim being **characterized in that** the intermediate part is made of a flexible matrix, the Young's modulus of uniaxial extension of the flexible matrix being greater than or equal to 50 MPa and less than or equal to 400 MPa;
and **in that** the Young's modulus of uniaxial extension of the rigid matrix is greater than or equal to 5 GPa.

2. Vehicle rim according to Claim 1, wherein the contact between the axially central part (20) and each intermediate part (31, 32) is made by one end (21) of the axially central part which passes into the intermediate part.

3. Vehicle rim according to Claim 2, wherein said end (21) of the axially central part (20) comprises an overthickness (22) that makes it possible to anchor the end in the intermediate part (31, 32).

4. Vehicle rim according to any one of Claims 1 to 3, wherein the contact between each lateral part (31, 32) that is separate from the axially central part (20) and the intermediate part (41, 42) in contact therewith is made by one end (34) of the lateral part which passes into the intermediate part.

5. Vehicle rim according to Claim 4, wherein said end (34) of the lateral part (31, 32) comprises an overthickness (33) that makes it possible to anchor the end in the intermediate part (41, 42).

6. Vehicle rim according to any one of Claims 1 to 5, wherein each lateral part (31, 32) that is separate from the axially central part (20) is entirely covered with the material of which the flexible matrix of the intermediate part (41, 42) in contact therewith is made.

7. Vehicle rim according to any one of Claims 1 to 6, comprising two intermediate parts (41, 42), wherein the two intermediate parts are symmetrical to one another.

8. Vehicle rim according to any one of Claims 1 to 7, wherein the material of which the flexible matrix of each intermediate part (41, 42) is made is polyurethane.

9. Vehicle rim according to any one of Claims 1 to 7, wherein the material of which the flexible matrix of each intermediate part (41, 42) is made is a rubber composition.

10. Vehicle rim according to any one of Claims 1 to 7, wherein the material of which the flexible matrix of each intermediate part (41, 42) is made is a thermoplastic elastomer.

11. Vehicle rim according to any one of Claims 1 to 10, wherein the material of which the rigid matrix of the axially central part (20) and the two lateral parts (31, 32) is made is a metal or a metal alloy.

12. Vehicle rim according to any one of Claims 1 to 11, wherein the Young's modulus of uniaxial extension of the rigid matrix is greater than the Young's modulus of uniaxial extension of the flexible matrix by a factor of greater than or equal to 100.
